# EUROPÄISCHE PATENTSCHRIFT

(11) **EP 4 313 746 B1**
(45) Veröffentlichungstag und Bekanntmachung des Hinweises auf die Patenterteilung: **09.04.2025**
(21) Anmeldenummer: 22708492.8
(22) Anmeldetag: 11.02.2022
(51) Int. Cl.: B62L 3/02, B60T 8/17

(54) **FAHRZEUG UND BREMSASSISTENZEINRICHTUNG FÜR EINE HYDRAULISCHE BREMSANLAGE FÜR EIN FAHRZEUG**
VEHICLE AND BRAKE ASSISTANT DEVICE FOR A HYDRAULIC BRAKE SYSTEM FOR A VEHICLE
VÉHICULE ET DISPOSITIF D'ASSISTANCE DE FREINAGE POUR SYSTÈME DE FREINAGE HYDRAULIQUE POUR VÉHICULE

(30) Priorität: 30.03.2021 DE 102021203227
(43) Veröffentlichungstag der Anmeldung: 07.02.2024
(73) Patentinhaber: Robert Bosch GmbH, 70442 Stuttgart (DE)
(72) Erfinder: MAIER, Oliver, 70186 Stuttgart (DE); WIDMAIER, Georg, 71229 Leonberg (DE); MOIA, Alessandro, 71088 Holzgerlingen (DE); VESENMAIER, Robin, 72108 Rottenburg (DE); VETTER, Michael, 72770 Ohmenhausen (DE)
(86) Internationale Anmeldenummer: PCT/EP2022/053330
(87) Internationale Veröffentlichungsnummer: WO 2022/207172

(56) Entgegenhaltungen:
- EP-A1- 2 857 268
- EP-A1- 3 628 556
- DE-A1- 102012 222 058
- JP-A- H01 119 462

## Beschreibung

### Stand der Technik

Die vorliegende Erfindung betrifft ein Fahrzeug sowie eine Bremsassistenzeinrichtung für eine hydraulische Bremsanlage für ein mit Muskelkraft und/oder elektromotorisch antreibbares Fahrzeug. Insbesondere betrifft die vorliegende Erfindung eine Bremsassistenzeinrichtung für ein E-Bike, ein Pedelec, ein Lasten-E-Bike sowie elektrische Leichtfahrzeug wie z.B. Rollstühle etc.

Die Standard ABS Realisierung setzt eine Pumpe zwischen der Handkraft des Fahrers und Speicherkammer ein.

Diese Umsetzung hat als gravierenden Schwachpunkt, dass die Dimension der Speicherkammer durch die gesetzliche Mindestverzögerung begrenzt ist, so dass die Kompatibilität mit den Basisbremsen dieses Systems sehr begrenzt ist.

Wenn ein Leck im Auslassventil dazu führt, dass die Speicherkammer bei normaler Bremsung unbeabsichtigt gefüllt wird, muss der Fahrer die gesetzlich vorgegebene Mindestverzögerung mit dem verbleibenden Bremshebelweg noch erreichen können. Dies bedeutet, dass die Dimension der Speicherkammer begrenzt sein muss, da sonst bei einer zu großen Speicherkammer das gesamte Verdrängungsvolumen des Bremshebels in die Speicherkammer fließen würde.

Das Problem ist bei Fahrradbremsen wegen des begrenzten Verdrängungsvolumens des Bremshebels und der einstellbaren Handbremshebelstellung sehr ausgeprägt. Wenn der Fahrer den Hebel nahe an den Lenker einstellt, verringert sich die Menge der Bremsflüssigkeit, die der Hebel verschieben kann. Infolgedessen ist der Standard-ABS-Kreislauf nicht mit allen herkömmlichen Grundbremsen kompatibel, da die Dimension der Speicherkammer so begrenzt ist, dass die ABS-Funktionalität nicht gewährleistet werden kann (aufgrund des geringen Speicherkammervolumens ist ein unzureichender Bremsdruckabbau möglich).

EP 3 124 344 A1 offenbart ein hydraulisches Bremssystem, welches einen elektrischen Motor mit einem verschiebbaren Kolben verwendet.

Der Kolben am Handhebel ist direkt mit einer Speicherkammer verbunden. Der bewegliche Kolben in der Speicherkammer ist mit einem elektrischen Antrieb verbunden. Ein Bypass ist vorgesehen, um Öl vom Handhebel direkt zum Bremssattel zu führen. Kommt es zu einer Blockade des Rades, wird ein durch eine Feder gelagerter Kolben durch Motorkraft verschoben. In Abhängigkeit einer Position des Kolbens wird der Bypass zwischen Handhebel und Bremssattel getrennt. Durch weiteres Verschieben des Kolbens kann der Druck am Bremssattel moduliert werden.

Da dieses Konzept keine Speicherkammer einsetzt und der Druckabbau erfolgt, indem der Kolben eine Kraft gegen den Bremshebel übt, steht dem Fahrer immer genügend Bremshebelweg zur Verfügung, um die gesetzliche Mindestverzögerung zu erreichen, somit ist die Kompatibilität mit Basisbremsen gewährleistet. Ein Problem des Systems ist dabei, dass der E-Motor gegen den vom Fahrer erzeugten Handdruck arbeiten muss. Dieser ist von Fahrer zu Fahrer unterschiedlich. Ist der Handdruck zu groß, ist es möglich, dass der Aktuator nicht mehr in der Lage ist, das erforderliche Drehmoment für ein Verschieben des Kolbens aufzubringen. Insbesondere bei Bremsungen auf losem Untergrund ist dieser Umstand besonders kritisch, da es eine große Druckdifferenz zwischen den Kammern gibt, die der Aktor kompensieren muss. Außerdem steigt der Leistungsbedarf bei höherem Handdruck deutlich an. D.h. die Energiequelle bzw. der Akku muss dem Motor mehr Leistung zur Verfügung stellen.

JP H01 119462 A offenbart eine Vorrichtung zur Regelung eines ASR/ABS-Bremssystems eines Zweirades mit einem Druckspeicher.

DE 10 2012 222058 A1 und EP 3 628 556 A1 offenbaren jeweils eine Vorrichtung zum Regeln eines Bremssystems eines Zweirades durch einen Spindelmotor.

EP 2 857 268 A1 offenbart eine Vorrichtung zum Regeln eines Bremssystems eines Zweirades.

WO 2018/083615 A1 offenbart ein Bremsassistenzsystem ohne Einlassventil. Dies ermöglicht die weitere Reduzierung des vom System eingenommenen Bauraums, hat jedoch den Nachteil, dass keine Gradientenkontrolle möglich ist, um den Bremsdruckgradienten zu begrenzen. Hierdurch kann der Fahrer den Druck in die Bremsanlage erhöhen. Ein weiterer Nachteil des Bremssystems besteht darin, dass im Falle einer Fehlfunktion des Aktuators der Kolben den Druck in der Bremsleitung unter 1 Bar senken kann. Durch den erzeugten Unterdruck kann der Aktuator Luft durch die Dichtungen in die Hydraulik saugen und somit deren Funktionsfähigkeit gefährden.

Es ist eine Aufgabe der vorliegenden Erfindung, ein verbessertes Konzept und eine verbesserte Auslegung der mechanischen Komponenten eines hydraulischen Bremsassistenzsystems vorzustellen, welche die im Stand der Technik bekannten Mängel behebt, die Funktion zumindest erhält und den Aufbau gegebenenfalls vereinfacht.

Die Erfindung ist definiert in dem beigefügten Anspruch 1.

### Offenbarung der Erfindung

Die vorliegende Erfindung löst die vorgenannte Aufgabe durch eine Bremsassistenzeinrichtung für eine hydraulische Bremsanlage für ein mit Muskelkraft und/oder elektromotorisch antreibbares Fahrzeug. Die Bremsassistenzeinrichtung umfasst hierbei einen Geber, welcher einen ersten Kolben aufweisen kann. Zur Betätigung des ersten Kolbens kann der Geber einen Handhebel aufweisen oder mit einem solchen zusammenwirken. Der erste Kolben wirkt auf einen ersten Leitungsabschnitt der hydraulischen Bremsanlage. Zusätzlich ist ein Ausgleichsvolumen vorgesehen, welches einen zweiten Kolben aufweist. Der zweite Kolben ist in dem Ausgleichsvolumen derart angeordnet, dass er durch ein Vorspannelement (z.B. eine Vorspannfeder) einen Druck auf die Hydraulikflüssigkeit / Bremsflüssigkeit ausübt. Das Ausgleichsvolumen kann hierzu einen Zylinder darstellen oder einen solchen Zylinder aufweisen, welcher mit dem zweiten Kolben zusammenwirkt. Insbesondere kann ein bezüglich des Vorspannelements jenseits des zweiten Kolbens angeordnetes Volumen mit Hydraulikflüssigkeit gefüllt sein. Den ersten Leitungsabschnitt schließt ein 2/2-Wegeventil ab. Das 2/2-Wegeventil ist somit hydraulisch an den ersten Kolben des Gebers gekoppelt. Das 2/2-Wegeventil kann auch als Einlassventilbaugruppe oder gesteuertes Einlassventil verstanden werden, da es in Abhängigkeit einer Raddrehzahl angesteuert wird, um ein dauerhaftes Blockieren des Rades zu verhindern. Hierzu wirkt das 2/2-Wegeventil mit einem Bremskolben in einem Bremssattel zusammen, welcher dem vorgenannten Rad zugeordnet ist. Erfindungsgemäß ist auch ein Aktuator vorgesehen, welcher mit dem zweiten Kolben im Ausgleichsvolumen zusammenwirkt. Das Vorspannelement ist eingerichtet, einen Druck auf den zweiten Kolben und somit auf ein Hydraulikfluid der Bremsanlage auszuüben. Insbesondere kann dieses Vorspannelement den Druck in einem solchen zweiten Leitungsabschnitt des Hydrauliksystems zu beeinflussen eingerichtet sein, welcher bezüglich des Gebers dem 2/2-Wegeventil gegenüberliegend angeordnet ist. Der Aktuator ist eingerichtet, den zweiten Kolben wahlweise in eine erste Richtung oder in eine zweite, zur ersten Richtung entgegengesetzt orientierte Richtung zu bewegen. Mit anderen Worten kann der Aktuator die durch das Vorspannelement erzeugte Kraftwirkung auf den zweiten Kolben verstärken oder verringern. Man könnte auch sagen, dass der Aktuator eingerichtet ist, den zweiten Kolben um eine durch das Vorspannelement und das Hydraulikfluid eingestellten Arbeitspunkt je nach Kraft-Wirkungs-Richtung in unterschiedliche, insbesondere einander entgegengesetzte, Richtungen auszulenken. Auf diese Weise ist das erfindungsgemäße Bremsassistenzsystem in der Lage, den Bremsdruck auch unterhalb der Speicherkammervorspannung zu modulieren.

Um sicherzustellen, dass das erfindungsgemäße Bremssystem die gesetzlich vorgeschriebene Mindestverzögerung im Falle einer AV-Leckage gewährleistet, ist eine mögliche Lösung die Einstellung der Speicherkammer-Federvorspannung. Durch eine detaillierte Analyse verschiedener Basisbremsen wurde der Bremsdruck ermittelt, der für jede Bremse erforderlich ist, um die gesetzliche Mindestverzögerung zu erreichen. Dieser Wert variiert zwischen ungefähr 30bar oder ungefähr 50bar. Wenn die Speicherkammerfeder mit einer Vorspannkraft vorgespannt wird, die hydraulisch 50bar entspricht, dann ist sichergestellt, dass das System auch bei einer Leckage des Auslassventils (AV) immer die gesetzliche Mindestverzögerung erreicht.

Die Unteransprüche zeigen bevorzugte Weiterbildungen der Erfindung.

Der Aktuator kann beispielsweise einen Elektromotor mit Spindeltrieb umfassen. Der Spindeltrieb kann insbesondere koaxial zur Bewegungsrichtung des zweiten Kolbens bzw. zu einer Symmetrieachse des zweiten Kolbens liegen. Somit ist eine hinreichend starke Kraftwirkung sowohl in die erste, als auch in die zweite Richtung sichergestellt.

Bevorzugt kann ein Auslassventil zwischen dem Bremskolben und dem Ausgleichsvolumen vorgesehen sein. Das Auslassventil kann ähnlich dem Einlassventil bzw. dem 2/2-Wegeventil ausgestaltet sein. Gegenüber dem 2/2-Wegeventil ist das Auslassventil jedoch eingerichtet, in Abwesenheit eines angelegten Signals zu sperren, während das 2/2-Wegeventil des Einlassventils in Abwesenheit eines angelegten Signals eingerichtet sein kann, Hydraulikfluid passieren zu lassen. Bei einer Fehlfunktion des Auslassventils (z.B. bei einem Stromausfall nach einer Bremsdruckreduzierung (z.B. nach einem negativen Mue-Sprung), also einer plötzlichen Reduktion des Reibkoeffizienten zwischen Reifen und Untergrund) würde das Auslassventil schließen und das Vorspannelement wäre nicht in der Lage, die Bremsflüssigkeit / Hydraulikfluid aus dem Ausgleichsbehälter zu verdrängen. Zur Lösung kann vorgeschlagen werden, ein Rückschlagventil in der Anordnung vorzusehen, welches einerseits zwischen dem Auslassventil und dem Ausgleichsvolumen und andererseits zwischen dem Geber und dem 2/2-Wegeventil (erster Leitungsabschnitt) angeordnet ist. Das Rückschlagventil kann derart orientiert sein, dass es eine Strömung in Richtung des Gebers stets zulässt. Durch das Rückschlagventil kann somit das Vorspannelement im Fehlerfall auch bei geschlossenem Auslassventil das Hydraulikfluid aus dem Ausgleichsvolumen verdrängen und dem Fahrer / dem Geber zum Bremsen zur Verfügung stellen.

Ein ähnlicher Effekt kann hergestellt werden, indem das Rückschlagventil einerseits zwischen dem Auslassventil und dem Ausgleichsvolumen und andererseits zwischen dem 2/2-Wegeventil und dem Bremskolben angeschlossen ist. Auch in diesem Fall kann es eine Strömung in Richtung des Bremskolbens bzw. in Richtung des 2/2-Wegeventils zulassen.

Um zu verhindern, dass im Falle einer Fehlsteuerung des Aktuators der Kolben Unterdruck generieren könnte und somit Luft in das Hydrauliksystem einziehen könnte, kann eine trennbare Verbindung zwischen dem zweiten Kolben und dem Aktuator vorgesehen werden. Die Verbindung kann sozusagen als wahlweise starre Verbindung bzw. wahlweise lose Verbindung verstanden werden. Insbesondere kann die Verbindung starr bezüglich eines Druckes des Aktuators auf den zweiten Kolben ausgeführt sein, während der Aktuator den zweiten Kolben nicht aus dem vom Hydraulikfluid gefüllten Bereich herausziehen kann oder nur mittelbar hierzu imstande ist. Beispielsweise kann vorgesehen sein, dass der Aktuator mit dem Kolben auf Zug lediglich über das Vorspannelement gekoppelt ist, während er auf Druck eine starre Verbindung bzw. Kontakt zum zweiten Kolben eingeht. Aufgrund der lösbaren Verbindung wird eine Bewegung des Kolbens aus dem Hydrauliksystem heraus ausschließlich durch den Hydraulikdruck erzwungen, so dass der Kolben sich nicht zu weit aus dem Hydrauliksystem herausbewegt, sobald der Bremsdruck 1bar erreicht. Es wird also stets ein Gleichgewicht mit dem Umgebungsdruck sichergestellt.

Idealerweise ist das Vorspannelement eingerichtet, in Verbindung mit dem zweiten Kolben (und ohne Kraftwirkung des Aktuators) einen hydraulischen Druck von mindestens 40bar, insbesondere 50bar, bevorzugt 60bar aufzubauen. Mit anderen Worten wird der Arbeitspunkt auf 40 bzw. 50 Bar, bevorzugt 60 Bar eingestellt, welcher anschließend durch den Aktuator moduliert werden kann. Bei einer Erhöhung des Drucks im Hydrauliksystem kann die Anzahl der Situationen reduziert werden, in denen der Elektromotor aktiv werden muss, um zu verhindern, dass Bremsflüssigkeit in das Ausgleichsvolumen fließt. Eine höhere Arbeitspunktlage des Hydraulikdrucks wirkt jedoch der Dynamik und Leistungsaufnahme des Systems entgegen, so dass weit höhere Werte vermieden werden sollten.

Das Vorspannelement kann eine Spiralfeder aufweisen. Mit anderen Worten kann der zweite Kolben mittels der Spiralfeder in Richtung des Hydraulikfluids gedrückt werden. Im Falle einer trennbaren Verbindung kann die Spiralfeder an dem zweiten Kolben einerseits und an dem Aktuator andererseits angeordnet sein und somit optional auch auf Zug beansprucht werden, wenn der Aktuator den zweiten Kolben mittels der Spiralfeder aus dem Hydrauliksystem herauszuziehen strebt.

Gemäß einem zweiten Aspekt der vorliegenden Erfindung wird ein durch Muskelkraft und/oder elektromotorisch antreibbares Fahrzeug (insbesondere E-Bike, Pedelec, Lasten-E-Bike, Elektroleichtfahrzeug, Rollstuhl, E-Trike oder E-Quad) vorgeschlagen, welches eine Bremsassistenzeinrichtung gemäß dem erstgenannten Erfindungsaspekt aufweist. Die Merkmale, Merkmalskombinationen und die sich aus diesen ergebenden Vorteile entsprechen den in Verbindung mit dem erstgenannten Aspekt oben ausgeführten derart ersichtlich, dass zur Vermeidung von Wiederholungen auf den ersten Aspekt der vorliegenden Erfindung verwiesen wird.

### Kurze Beschreibung der Figuren

Nachfolgend werden Ausführungsbeispiele der Erfindung unter Bezugnahme auf die begleitende Zeichnung im Detail beschrieben. Es zeigen:
- Figur 1: eine schematische Darstellung eines erfindungsgemäß ausgestalteten E-Bikes mit einer erfindungsgemäß ausgestalteten Bremsassistenzeinrichtung;
- Figur 2: ein gemäß dem Stand der Technik ausgestaltetes Bremssystem in einem ersten Betriebszustand mit nahezu leerem Ausgleichsvolumen;
- Figur 3: ein gemäß dem Stand der Technik ausgestaltetes Bremssystem in einem ersten Betriebszustand mit gefülltem Ausgleichsvolumen;
- Figur 4: ein erstes Ausführungsbeispiel einer erfindungsgemäß ausgestalteten Bremsassistenzeinrichtung ohne Auslassventil;
- Figur 5: ein zweites Ausführungsbeispiel einer erfindungsgemäß ausgestalteten Bremsassistenzeinrichtung mit Auslassventil;
- Figur 6: ein drittes Ausführungsbeispiel einer erfindungsgemäß ausgestalteten Bremsassistenzeinrichtung mit Rückschlagventil;
- Figur 7: ein viertes Ausführungsbeispiel einer erfindungsgemäß ausgestalteten Bremsassistenzeinrichtung mit Rückschlagventil; und
- Figur 8: eine geschnittene Detailansicht eines Ausführungsbeispiels eines erfindungsgemäß verwendbaren Aktuators mit wahlweise trennbarer Verbindung zu einem zweiten Kolben.

### Ausführungsformen der Erfindung

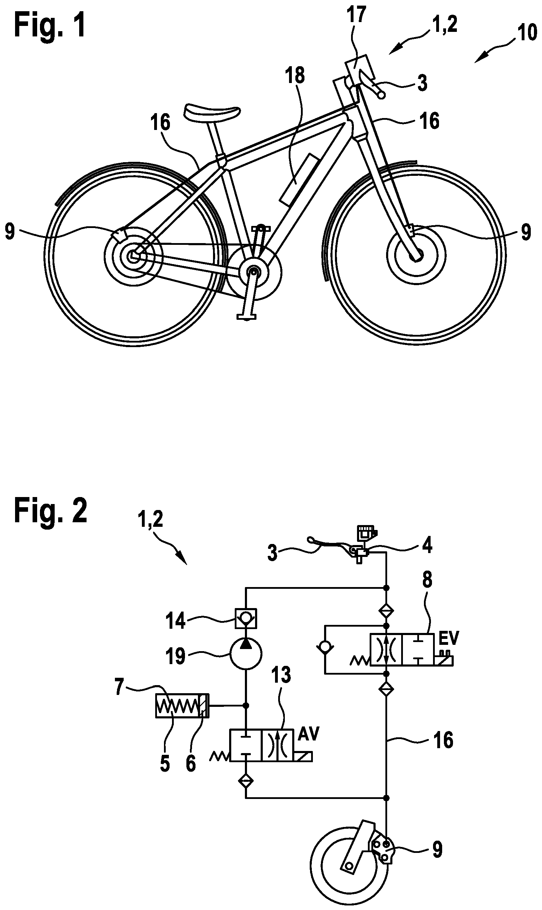

Figur 1 zeigt ein E-Bike 10 als Ausführungsbeispiel eines erfindungsgemäß ausgestalteten Fortbewegungsmittels mit einem Ausführungsbeispiel einer Bremsassistenzeinrichtung 1 für eine hydraulische Bremsanlage 2. Am vorderen Rad sowie am hinteren Rad des E-Bikes 10 sind ein jeweiliger Bremskolben 9 in einem Bremssattel vorgesehen. Diese Bremskolben 9 sind über hydraulische Leitungen 16 mit einem Handhebel 3 als Geber sowie einem Steuergerät 17 hydraulisch verbunden. Eine Traktionsenergie bereitstellender Akku 18 speist zudem die Sensorik und Aktuatorik sowie die Elektroventile der Bremsassistenzeinrichtung 1.

Figur 2 zeigt eine gemäß dem Stand der Technik ausgestaltete Bremsassistenzeinrichtung 1 für eine hydraulische Bremsanlage 2 in einem ersten Betriebszustand. Hier wird eine Pumpe 19 verwendet, um über das Auslassventil 13 und gegebenenfalls im Ausgleichsvolumen 5 zwischengespeichertes Hydraulikfluid über ein Rückschlagventil 14 erneut dem Geber 3 bzw. dem ersten Kolben 4 und dem 2/2-Wegeventil 8 zur Verfügung zu stellen. Das Ausgleichsvolumen 5 ist im dargestellten Betriebszustand nahezu restentleert. Das Vorspannelement in Form einer Spiralfeder 7 ist aufgrund des vergleichsweise leeren Ausgleichsvolumens 5 entspannt.

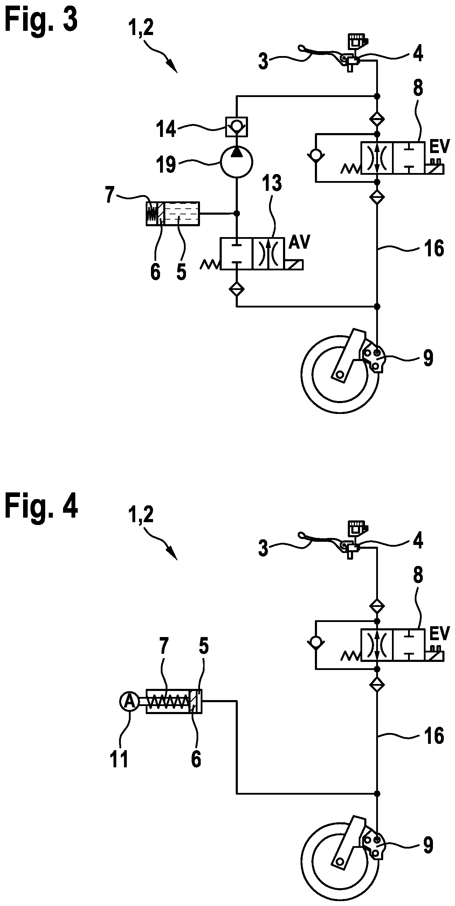

Figur 3 zeigt die in Figur 2 dargestellte Situation, in welcher das Ausgleichsvolumen 5 nun annähernd vollständig gefüllt ist. Eine Hydraulikleitung 16 schließt den Kreis zwischen dem 2/2-Wegeventil 8 und dem Auslassventil 13 bzw. koppelt den Bremskolben 9 mit dem Hydraulikkreislauf. Das Vorspannelement 7 in Form einer Spiralfeder ist aufgrund des gefüllten Ausgleichsvolumens 5 stark komprimiert.

Figur 4 zeigt ein erstes Ausführungsbeispiel einer erfindungsgemäßen Bremsassistenzeinrichtung 1 für eine hydraulische Bremsanlage 2. Über einen Handhebel 3 eines Gebers und einen ersten Kolben 4 kann Hydraulikfluid in Abhängigkeit eines Steuersignals das 2/2-Wegeventil 8 über eine Hydraulikleitung 16 in Richtung des Bremskolbens 9 strömen. Ein Ausgleichsvolumen 5 ist vorgesehen, abfließendes Hydraulikfluid zwischenzuspeichern. Der Arbeitspunkt bzw. der Hydraulikdruck werden über ein Vorspannelement 7 in Form einer Spiralfeder eingestellt. Über eine (nicht dargestellte) trennbare Verbindung ist ein Aktuator in Form eines Spindelmotors 11 mit dem zweiten Kolben 6 wirkverbunden. Der Spindelmotor 11 kann somit Zug- und Druckkräfte auf den zweiten Kolben 6 bewirken.

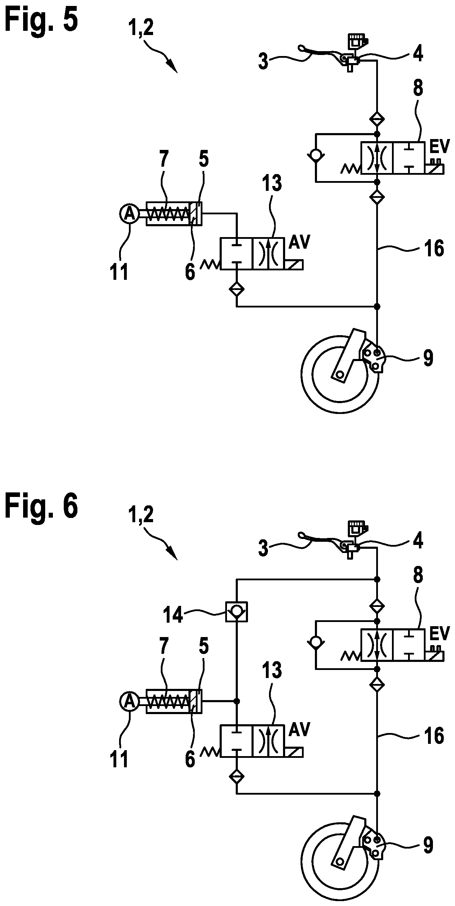

Figur 5 zeigt die in Figur 4 vorgestellte Anordnung, wobei zwischen dem Ausgleichsvolumen 5 und dem Bremskolben 9 bzw. dem 2/2-Wegeventil 8 ein steuerbares Auslassventil 13 vorgesehen ist. In Abhängigkeit eines Steuersignals kann das Auslassventil 13 geöffnet werden; bei Ausbleiben des Steuersignals schließt es.

Figur 6 zeigt die in Figur 5 vorgestellte Anordnung, welche durch Einführung eines Rückschlagventils 14 zwischen dem Auslassventil 13 und dem Ausgleichsvolumen 5 einerseits und dem ersten Kolben 4 bzw. im 2/2-Wegeventil 8 andererseits angeordnet ist. Ein Rückfluss von Hydraulikfluid aus dem Ausgleichsvolumen 5 in Richtung des 2/2-Wegeventils 8 ist somit jederzeit möglich, während das Rückschlagventil 14 in Richtung des Ausgleichsvolumens 5 sperrt.

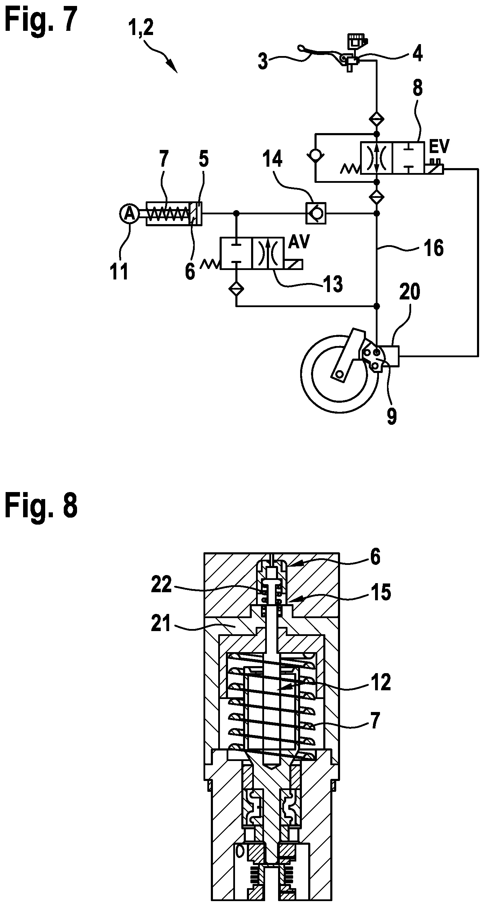

Figur 7 zeigt eine gegenüber Figur 6 dahingehend modifizierte Anordnung, dass das Rückschlagventil 14 nicht an den ersten Leitungsabschnitt, sondern an einen zweiten Leitungsabschnitt zwischen dem 2/2-Wegeventil 8 und dem Bremskolben 9 angeschlossen ist. Zudem ist ein Sensor 20 im Bereich des Bremskolbens 9 angeordnet, welcher die Raddrehzahl ermittelt und ein entsprechend generiertes Steuersignal an das 2/2-Wegeventil 8 ausgibt.

Figur 8 zeigt eine geschnittene Detailansicht eines Aktuators 11 mit einem Spindeltrieb 12, welcher über eine wahlweise trennbare Verbindung 15 mit einem zweiten Kolben 6 gekoppelt ist. Drückt der Spindeltrieb 12 auf den zweiten Kolben 6, sind die Positionen von Spindeltrieb 12 und zweitem Kolben 6 unmittelbar miteinander gekoppelt. Wird der Spindeltrieb 12 vom zweiten Kolben 6 entfernt, sind der Spindeltrieb 12 und der Kolben 6 lediglich über die Spiralfeder 7 miteinander gekoppelt. Der Aktuator 11 kann hierzu die große Feder 7 durch den Federteller 21 und die Spindel 12 komprimieren. Der kleine Kolben 6 hat eine weitere kleine Feder 22 und keine feste Verbindung mit dem Federteller 21. Wenn sich der Federteller 21 und die Spindel 12 nach oben bewegen, dann pressen diese den kleinen Kolben 6 nach oben. Wenn sich der Federteller 21 und die Spindel 12 nach unten bewegen, dann bewegt der hydraulische Druck den Kolben 6 nach unten. Wenn in der Bremsleitung kein Druck vorhanden ist, dann kann sich der Kolben 6 nicht nach unten bewegen und die Verbindung zwischen Kolben und Spindel 12 / Federteller 21 öffnet sich.

## Patentansprüche

1. Bremsassistenzeinrichtung für eine hydraulische Bremsanlage (2) für ein mit Muskelkraft und/oder elektromotorisch antreibbares Fahrzeug (10), die Bremsassistenzeinrichtung (1) umfassend
- einen Geber (3) mit einem ersten Kolben (4),
- ein Ausgleichsvolumen (5) mit einem zweiten Kolben (6) und einem Vorspannelement (7),
- ein 2/2-Wegeventil (8)
- einen Bremskolben (9), und
- einen Aktuator (11), wobei
das Vorspannelement (7) eingerichtet ist, einen Druck auf den zweiten Kolben (6) und somit auf ein Hydraulikfluid der Bremsanlage (2) auszuüben, **dadurch gekennzeichnet, dass**
der Aktuator (11) eingerichtet ist, den zweiten Kolben (6) wahlweise in eine erste Richtung oder in eine zweite, zur ersten Richtung entgegengesetzt orientierte Richtung zu bewegen.

2. Bremsassistenzeinrichtung nach Anspruch 1, wobei der Aktuator (11) einen Elektromotor mit Spindeltrieb (12) umfasst.

3. Bremsassistenzeinrichtung nach Anspruch 1 oder 2, wobei der Geber (3) einen Handhebel umfasst.

4. Bremsassistenzeinrichtung nach einem der vorstehenden Ansprüche, wobei
- ein Auslassventil (13) zwischen dem Bremskolben (9) und dem Ausgleichsvolumen (5) vorgesehen ist und weiter
- zwischen dem Auslassventil (13) und dem Ausgleichsvolumen (5) einerseits und zwischen dem Geber (3) und dem 2/2-Wegeventil (8) andererseits ein Rückschlagventil (14) vorgesehen ist.

5. Bremsassistenzeinrichtung nach einem der vorstehenden Ansprüche 1 bis 3, wobei
- ein Auslassventil (13) zwischen dem Bremskolben (9) und dem Ausgleichsvolumen (5) vorgesehen ist und weiter
- zwischen dem Auslassventil (13) und dem Ausgleichsvolumen (5) einerseits und zwischen dem 2/2-Wegeventil (8) und dem Bremskolben (9) andererseits ein Rückschlagventil (14) vorgesehen ist.

6. Bremsassistenzeinrichtung nach einem der vorstehenden Ansprüche, wobei zwischen dem Aktuator (11) und dem zweiten Kolben (6) eine wahlweise trennbare Verbindung vorgesehen ist.

7. Bremsassistenzeinrichtung nach einem der vorstehenden Ansprüche, wobei das Vorspannelement (7) eingerichtet ist, einen hydraulischen Druck von mindestens 40 Bar, insbesondere 50 Bar, bevorzugt 60 Bar aufzubauen.

8. Bremsassistenzeinrichtung nach einem der vorstehenden Ansprüche, wobei das Vorspannelement (7) eine Spiralfeder umfasst.

9. Mit Muskelkraft und/oder elektromotorisch antreibbares Fahrzeug (10), insbesondere e-Bike oder Pedelec, umfassend eine Bremsassistenzeinrichtung (1) nach einem der vorstehenden Ansprüche.

## Claims

1. Brake assistance device for a hydraulic brake system (2) for a vehicle (10) powered by muscle and/or motor power, the brake assistance device (1) comprising
- an input device (3) with a first piston (4),
- a compensation volume (5) with a second piston (6) and with a preload element (7),
- a 2/2-way valve (8),
- a brake piston (9), and
- an actuator (11), wherein
the preload element (7) is configured to exert a pressure on the second piston (6) and thus on a hydraulic fluid of the brake system (2), **characterized in that**
the actuator (11) is configured to move the second piston (6) selectively in a first direction or in a second direction that is oriented oppositely in relation to the first direction.

2. Brake assistance device according to Claim 1, wherein the actuator (11) comprises an electric motor with spindle drive (12).

3. Brake assistance device according to Claim 1 or 2, wherein the input device (3) comprises a hand lever.

4. Brake assistance device according to one of the preceding claims, wherein
- an outlet valve (13) is provided between the brake piston (9) and the compensation volume (5), and furthermore
- a check valve (14) is provided between the outlet valve (13) and the compensation volume (5), on the one hand, and between the input device (3) and the 2/2-way valve (8), on the other hand.

5. Brake assistance device according to one of preceding Claims 1 to 3, wherein
- an outlet valve (13) is provided between the brake piston (9) and the compensation volume (5), and furthermore
- a check valve (14) is provided between the outlet valve (13) and the compensation volume (5), on the one hand, and between the 2/2-way valve (8) and the brake piston (9), on the other hand.

6. Brake assistance device according to one of the preceding claims, wherein a selectively separable connection is provided between the actuator (11) and the second piston (6).

7. Brake assistance device according to one of the preceding claims, wherein the preload element (7) is configured to build up a hydraulic pressure of at least 40 bar, in particular 50 bar, preferably 60 bar.

8. Brake assistance device according to one of the preceding claims, wherein the preload element (7) comprises a spiral spring.

9. Vehicle (10) powered by muscle and/or motor power, in particular an e-bike or pedelec, comprising a brake assistance device (1) according to one of the preceding claims.

## Revendications

1. Dispositif d'assistance au freinage pour un système de freinage hydraulique (2), destiné à un véhicule (10) pouvant être entraîné par la force musculaire et/ou un moteur électrique, le dispositif d'assistance au freinage (1) comprenant
- un transmetteur (3) pourvu d'un premier piston (4),
- un volume de compensation (5) pourvu d'un deuxième piston (6) et d'un élément de précontrainte (7),
- un distributeur 2/2 voies (8),
- un piston de frein (9), et
- un actionneur (11), dans lequel
l'élément de précontrainte (7) est conçu pour exercer une pression sur le deuxième piston (6) et donc sur un fluide hydraulique du système de freinage (2), **caractérisé en ce que**
l'actionneur (11) est conçu pour déplacer le deuxième piston (6) sélectivement dans une première direction ou dans une deuxième direction orientée à l'opposé de la première direction.

2. Dispositif d'assistance au freinage selon la revendication 1, dans lequel l'actionneur (11) comprend un moteur électrique à mécanisme à vis (12).

3. Dispositif d'assistance au freinage selon la revendication 1 ou 2, dans lequel le transmetteur (3) comprend un levier à main.

4. Dispositif d'assistance au freinage selon l'une quelconque des revendications précédentes, dans lequel
- une soupape de sortie (13) est prévue entre le piston de frein (9) et le volume de compensation (5), et en outre
- un clapet antiretour (14) est prévu entre la soupape de sortie (13) et le volume de compensation (5) d'une part et entre le transmetteur (3) et le distributeur 2/2 voies (8) d'autre part.

5. Dispositif d'assistance au freinage selon l'une quelconque des revendications précédentes 1 à 3, dans lequel
- une soupape de sortie (13) est prévue entre le piston de frein (9) et le volume de compensation (5), et en outre
- un clapet antiretour (14) est prévu entre la soupape de sortie (13) et le volume de compensation (5) d'une part et entre le distributeur 2/2 voies (8) et le piston de frein (9) d'autre part.

6. Dispositif d'assistance au freinage selon l'une quelconque des revendications précédentes, dans lequel une connexion pouvant être séparée sélectivement est prévue entre l'actionneur (11) et le deuxième piston (6).

7. Dispositif d'assistance au freinage selon l'une quelconque des revendications précédentes, dans lequel l'élément de précontrainte (7) est conçu pour accumuler une pression hydraulique d'au moins 40 bar, en particulier de 50 bar, de préférence de 60 bar.

8. Dispositif d'assistance au freinage selon l'une quelconque des revendications précédentes, dans lequel l'élément de précontrainte (7) comprend un ressort en spirale.

9. Véhicule (10) pouvant être entraîné par la force musculaire et/ou un moteur électrique, en particulier vélo électrique ou vélo à assistance électrique, comprenant un dispositif d'assistance au freinage (1) selon l'une quelconque des revendications précédentes.
